Europäisches Patentamt

(19) European Patent Office    (11) Publication number: **0 062 852**

Office européen des brevets    **·B1**

(12)    **EUROPEAN PATENT SPECIFICATION**

(45) Date of publication of patent specification: **28.01.87**    (51) Int. Cl.⁴: **G 09 B 19/08**

(21) Application number: **82102788.5**

(22) Date of filing: **01.04.82**

(54) Illustrated bilingual text system.

| | |
|---|---|
| (30) Priority: **10.04.81 ES 257546** | (73) Proprietor: **Nabau Perez, Jorge**<br>**Calle Amilcar 147**<br>**Barcelona (ES)** |
| (43) Date of publication of application:<br>**20.10.82 Bulletin 82/42** | (73) Proprietor: **Guasch Giner, Pedro**<br>**Plazo Eduardo Torroja 18**<br>**Barcelona 20 (ES)** |
| (45) Publication of the grant of the patent:<br>**28.01.87 Bulletin 87/05** | (72) Inventor: **Nabau Perez, Jorge**<br>**calle Amilcar, 147**<br>**Barcelona (ES)** |
| (84) Designated Contracting States:<br>**AT BE CH DE FR GB IT LI LU NL SE** | (74) Representative: **WILHELMS, KILIAN & PARTNER**<br>**Patentanwälte**<br>**Eduard-Schmid-Strasse 2**<br>**D-8000 München 90 (DE)** |
| (56) References cited:<br>**CH-A- 271 394**<br>**GB-A- 508 570**<br>**US-A-3 566 483** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention refers to an illustrated text system with a bilingual alternative text which is meant to help children to learn a foreign language. The text will use expressions common to this language hoping that in this way its use will be agreeable and even fun.

The learning of a foreign language can be difficult for some children when they aren't attracted by the usual school texts. For this reason we have invented short stories which will facilitate the reading and will give the student a basic knowledge of the language. This will come about by the interest which the story will arouse in young children.

US—A—3,566,483 discloses an illustrated bilingual text system which comprises a plate having on one side a pair of spaced texts in two languages, a folded sheet having a movable front page and a back page covering the plate, the front page being provided with illustrations and a punched opening corresponding to the pair of texts, the plate being connected along a rim portion to the sheet which has on every page two folds parallel to the rim permitting displacement of the front page relative to the plate such as to register the punched opening with one text of the pair of texts in each of two alternative positions. The known apparatus inherently shows the shortcoming to have a thickness of at least three layers though being a unilateral embodiment. Thus, a combination of several such systems to form e.g. a book will be rather voluminous.

GB—A—508,570 discloses improvements in or relating to educational appliances, particularly for facilitating the study of foreign languages, characterized in that it comprises a mechanical combination of a text having two distinct parts with a slotted screening frame, the displacements of which are suitably guided and limited in such a manner as to render it possible to screen off at will the one or the other part of the text. The guide means for the displacement of said slotted screen may be either helices cooperating with guiding lugs or tongues, or, marginally, grooves cooperating with rivets. This type of means, however, in many respects is quite different from the type of apparatus described above.

What characterizes the illustrated text system with a bilingual text system according to the invention is as defined in the claims.

The page that can be displaced is united to the adjacent plate by folds resembling a bellows, elongated openings or something similar, which permits an alternate displacement of the sheet of paper in two stable positions that correspond to the confrontation of the punched areas to the two texts in different language that appear on the plate.

Preferably the moveable page will have a partially punched flange which can be pulled and in this way moved. It will also have a wing which will lift or fall according to the movements of the page.

For a better understanding of what is described in this specification, there are included some drawings which represent an example of the invention.

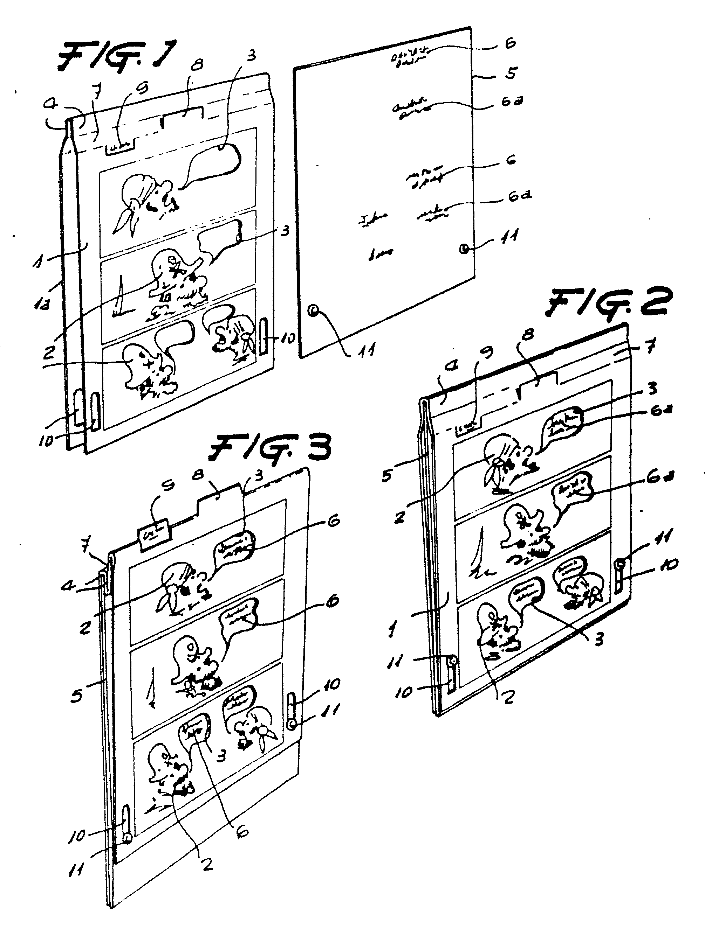

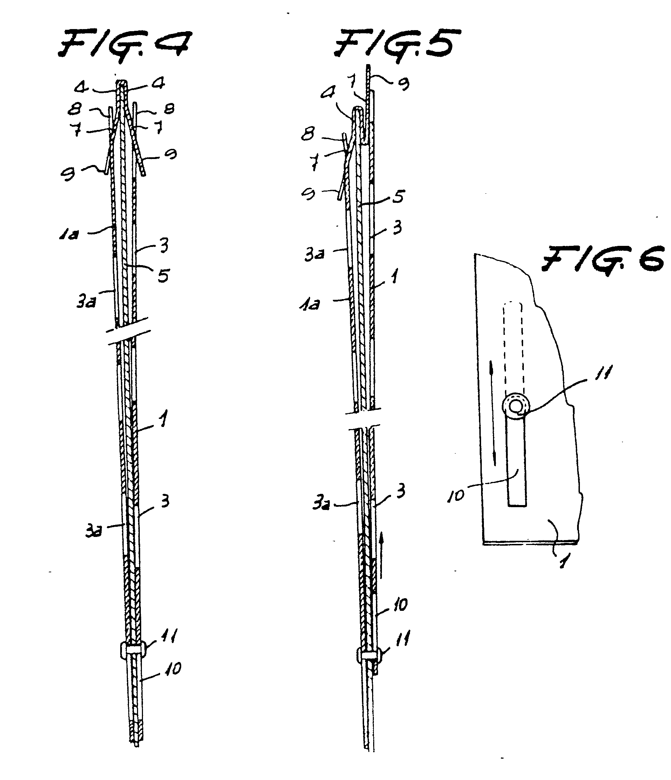

In these drawings, figure 1 is a view in perspective of the text system taken apart; figure 2 is a view in perspective of the text system in one of its reading positions; figure 3 is a view in perspective of the same sheet of paper in its second reading position; figure 4 is a longitudinal section on a larger scale which shows a double sheet of paper in one of its reading positions; figure 5 is a longitudinal section which shows the double sheet of paper in it other reading position; and figure 6 represents a detail of the alternate movement.

The illustrated bilingual text system has in the drawings one moveable page 1 in which obverse there are illustrations 2, and which possesses punched openings 3 in the areas destined to be for the texts.

The moveable page 1 has in one of the far rims the flange 4 attached to a posterior plate 5, which contains two texts 6 and 6a in different languages, and which can be selectively confronted with the punched openings 3.

Page 1 presents, after the flange 4, folds 7 resembling a bellows, which allow an alternate displacement of the page, as can be seen in drawings 2 and 5.

This same page 1 presents a punched flange 8 which works as a lever. This page 1 has a punched wing 9 which carries instructions that refer to the two languages of the text, situated in the obverse and reverse respectively.

There is provided for that page 1 should be double, forming a page 1a situated on the other side of the plate that contains the texts, which represents the texts of one and the other page 1, 1a printed in the opposite corresponding faces.

In the drawings the guide of page 1 and 1a in its alternate movements is completed by means of elongated punches 10 and pivots 11 jointly with plate 5.

From what has been described can be seen how these text systems work. In fact, pages 1 and 1a move in two stable positions, thanks to the fold 7, in which position the windows 3 face one or the other of the texts 6 and 6a that correspond to the two different languages. The page moves thanks to the flange 8 which works as a lever.

The described movements condition the opening and closing of the wing 9 each time the same starts from the corresponding one of the lines of the folds 7. In this way there can be seen the text of one of the languages and the indication of the same language that appear on the wing 9.

It should also be taken into consideration the fact that this illustrated text system can form part of another book, notebook or other sheets of paper.

It is obvious that one could have a text system wherein the moveable sheets should be those of the text and that the means of displacement differ from those described. Also, the material used in the putting together of the different parts of the text system will be independent to the object of the invention, its forms and dimensions and all the accessories needed.

**Claims**

1. An illustrated bilingual text system comprising a plate (5) having on one side several pairs of spaced texts in the two languages, a folded sheet (1, 1a) having a movable front page (1) and a back page (1a) covering said plate (5), said front page being provided with illustrations and punched openings (3) corresponding to each pair of texts, said plate (5) being connected along a rim portion to said sheet (1, 1a) which has on every page two folds (7) parallel to said rim permitting displacement of said front page (1) relative to the plate (5) such as to register each punched opening with one text of one of said pairs of texts in each of two alternative positions characterized in that said back page (1a) is of a similar structure as said front page (1) and is provided for cooperation with said plate (5) in the same manner as said front page (1) but in respect of the reverse side of said plate (5);

said back and front pages (1, 1a) are provided along said folds (7) at their rim portions for the connection to said plate (5) with flanges (4) attaching said front and back pages to said plate,

said pages have on their rim portions opposite to said connecting flanges at least one lateral guide (10) for guiding the pages (1, 1a) in respect of the plate (5).

2. An illustrated text system according to claim 1, characterized in that the at least one lateral guide consists of an elongated punch (10) on the respective page (1, 1a) and a stable pivot (11) on the plate (5).

3. An illustrated text system according to claim 1 or 2, characterized in that each page (1, 1a) presents, at least, one punched wing (9) beginning in one of the folds, having in the obverse and reverse the instructions referring to the bilingual texts, according to the position of the page (1, 1a).

**Patentansprüche**

1. Illustriertes zweisprachiges Textsystem mit einer Platte (5), welche auf einer Seite mehrere Paare von im Abstand liegenden Texten in den zwei Sprachen aufweist, einem gefalteten Blatt (1, 1a), welches eine bewegliche Vorderseite (1) und eine Rückseite (1a), welche die Platte (5) abdekken, aufweist, wobei die Vorderseite mit Illustrationen und gestanzten Öffnungen (3), die den einzelnen Textpaaren entsprechen, versehen ist, wobei die Platte (5) längs eines Randabschnitts mit dem Blatt (1, 1a) verbunden ist, welches auf jeder Seite parallel zu diesem Rand zwei Falze (7) aufweist, welche eine Verschiebung der Vorderseite (1) in Bezug auf die Platte (5) derart gestatten, daß jede gestanzte Öffnung in Ausrichtung auf einen Text eines der Textpaare in jeder von zwei alternativen Stellungen gelangt, dadurch gekennzeichnet, daß die Rückseite (1a) von gleichartigem Aufbau wie die Vorderseite (1) ist und für ein Zusammenwirken mit der Platte (5) in der gleichen Weise wie die Vorderseite (1), aber in Bezug auf die rückwärtige Seite der Platte (5) vorgesehen ist;

wobei Vorder- und Rückseite (1, 1a) längs der Falze (7) an ihren Randabschnitten für die Verbindung mit der Platte (5) mit Flanschen (4), welche Vorder- und Rückseite an der Platte anbringen, versehen sind,

wobei die Seiten an ihren den Verbindungsflanschen gegenüberliegenden Randabschnitten wenigstens eine seitliche Führung (10) zur Führung der Seiten (1, 1a) in Bezug auf die Platte (5) aufweisen.

2. Illustriertes Textsystem nach Anspruch 1, dadurch gekennzeichnet, daß die wenigstens eine seitliche Führung aus einer langgestreckten Stanzung (10) auf der betreffenden Seite (1, 1a) und einem festen Zapfen (11) auf der Platte (5) besteht.

3. Illustriertes Textsystem nach Anspruch 1 oder 2, dadurch gekennzeichnet, daß jede Seite (1, 1a) beginnend in einem der Falze wenigstens einen gestanzten Flügel (9) aufweist, der je nach Stellung der Seite (1, 1a) auf Vorder- und Rückseite die sich auf die zweisprachigen Texte beziehenden Anweisungen aufweist.

**Revendications**

1. Dispositif à texte bilingue illustré comprenant une plaque (5) présentant sur une face plusieurs paires de textes espacés dans les deux langues, une feuille pliée (1, 1a) présentant une page avant mobile (1) et une page arrière (1a) recouvrant cette plaque (5), la page avant étant munie d'illustrations et d'ouvertures réalisées par poinçonnage (3) correspondant à chaque paire de textes, la plaque (5) étant reliée, le long d'un bord à la feuille (1, 1a) qui présente sur chaque page deux plis (7) qui sont parallèles à ce bord et qui permettent un déplacement de la page avant (1) par rapport à cette plaque (5) de manière à faire coincider chaque ouverture réalisée par poinçonnage avec l'un des textes faisant partie de ladite paire de textes pour chacune de deux positions à choisir, caractérisé en ce que la page arrière (1a) présente une structure analogue à la page avant (1) et est agencée de façon à coopérer avec la plaque (5) de la même manière que cette page avant (1), mais en liaison avec la face du verso de cette plaque (5), ces pages avant et arrière (1, 1a) étant munies, le long desdits plis (7) situés sur leurs bords et en vue de la liaison avec la plaque (5), de rebords (4) qui fixent ces pages avant et arrière sur cette plaque, ces mêmes pages présentant, sur leurs bords situés à l'opposé de ces rebords de liaison, au moins un guide latéral (10) permettant de guider ces pages (1, 1a) par rapport à la plaque (5).

2. Dispositif à texte illustré selon la revendication (1), caractérisé en ce que le guide latéral est constitué d'un élément allongé réalisé par poinçonnage (10) situé sur la page considérée (1, 1a), et d'un téton fixe (11) situé sur la plaque (5).

3. Dispositif à texte illustré selon la revendication 1 ou 2, caractérisé en ce que chaque page (1, 1a) présente au moins un volet réalisé par poinçonnage (9) qui part de l'un des plis et présente sur son recto et son verso les instructions concernant les textes bilingues en fonction de la position de lapage (1, 1a).

0 062 852

FIG. 1

FIG. 2

FIG. 3

1

# FIG.4

# FIG.5

# FIG.6